# EUROPEAN PATENT APPLICATION

(11) **EP 3 588 176 A1**
(43) Date of publication of application: **01.01.2020**
(21) Application number: 18758162.4
(22) Date of filing: 04.01.2018
(51) Int. Cl.: G02F 1/13

(54) **ADJUSTABLE HEAT INSULATION WINDOW**

(30) Priority: 21.02.2017 US 201715438382
(71) Applicant: National Sun Yat-Sen University, Kaohsiung 80424 (TW)
(72) Inventor: LIN, Tsunghsien, Kaohsiung 80424 (TW); LI, Chengchang, Kaohsiung 80424 (TW); JAU, Hungchang, Kaohsiung 80424 (TW); TAI, Maochou, Kaohsiung 80424 (TW)
(74) Representative: Petraz, Gilberto Luigi
(86) International application number: PCT/CN2018/071327
(87) International publication number: WO 2018/153169

(57) **Abstract**

Disclosed is an adjustable heat insulation window, comprising a first transparent substrate (10) and a second transparent substrate (20), wherein a heat insulation layer (30) is arranged between the first transparent substrate (10) and the second transparent substrate (20); the heat insulation layer (30) comprises a liquid crystal composition; the liquid crystal composition includes a plurality of liquid crystal molecules (31), a dichroic dye (32) and an ionic salt (33); the liquid crystal molecules (31) have negative dielectric conductivity; and the visible light absorption wavelength of the dichroic dye (32) is between 400 nanometres and 780 nanometres. The adjustable heat insulation window can adjust the transparency under different voltages.

## Description

### FIELD OF THE INVENTION

The present invention relates to an adjustable heat insulation window, and in particular to a window having an adjustable transparency and a thermal insulation property.

### BACKGROUND OF THE INVENTION

In the applications of smart windows, in addition to the high penetration rate to be as general glasses, the heat insulation and the privacy protection are also important for the smart windows.

In earlier smart windows, twisted-nematic (TN) liquid crystals are usually used with a polarizer for liquid crystal alignment, and thus the light transmittances required for the smart windows are reduced, and the cost for installing the polarizer is added.

Recently, in the optical switch technology, there is also a considerable amount of technologies, such as electrochromic, photochromic, suspended particle device, and polymer dispersed liquid crystal, that provides a highly transparent state and an absorbing state switchable to each other, or a highly transparent state and a scattering state switchable to each other, and they are applied to a smart window. However, most of these technologies can only be switched between two states, and therefore cannot switch between high transparency, high absorption, and scattering state, and cannot have a variety of switching characteristics.

It is therefore necessary to provide an adjustable heat insulation window with high transparency, high adsorption, and scattering state to be switched, in order to solve the problems existing in the conventional technology as described above.

### SUMMARY OF THE INVENTION

A primary object of the present invention is to provide a. adjustable heat insulation window using a liquid crystal composition to reach a transparent state, adsorption state, and a shielding state under different voltages. The liquid crystal composition, comprising liquid crystals having negative anisotropies, a dichroic dye, and an ionic salt, performs the transparent state without voltage being applied, the adsorption state in a low voltage range with a certain degree of thermal insulation, and the shielding state in a high voltage range with fogging effect and thermal insulation, to provide mobile or building applications. In addition, since the liquid crystal composition has a maximum visible light transmittance more than 65% without voltage being applied, it can be returned to the transparent state when the power is cut off unexpectedly, so as to improve the safety when used as a mobile glass. The adjustable heat insulation window has simple structure because a polarization film is not necessarily required, such that the transmittance can be improved and the cost and assembly process of the polarization film can be saved.

To achieve the above objects, the present invention provides an adjustable heat insulation window, comprising a first transparent substrate comprising a first electrode; a second transparent substrate comprising a second electrode; and a heat insulation layer disposed between the first transparent substrate and the second transparent substrate, wherein the heat insulation layer comprising a liquid crystal composition; wherein the liquid crystal composition comprising a plurality of liquid crystal molecules, a dichroic dye, and an ionic salt, the liquid crystal molecules have negative anisotropies, and the dichroic dye has a visible absorption wavelength ranged from 400 to 780 nm.

In one embodiment of the present invention, the liquid crystal molecules are nematic.

In one embodiment of the present invention, the ionic salt is water soluble.

In one embodiment of the present invention, the ionic salt is NaCI, CaSO₄, (NH₄)₂SO₄, Na₂CO₃, NaHCO₃, KNO₃, or tetrabutylammonium tetrafluoroborate (TBATFB).

In one embodiment of the present invention, the first electrode and the second electrode are configured to provide a voltage to lower the transmittance of the heat insulation layer and allow the heat insulation layer to absorb a part of visible light.

In one embodiment of the present invention, the voltage is less than or equal to 10 V, and the heat insulation layer has a visible light transmittance ranged from 30% to 65%.

In one embodiment of the present invention, the voltage is more than or equal to 20 V, and the heat insulation layer has a visible light transmittance less than 5%.

In one embodiment of the present invention, the voltage is less than or equal to 10 V, and the heat insulation layer has a near infrared transmittance more than 85%.

In one embodiment of the present invention, the voltage is more than or equal to 20 V, and the heat insulation layer has a near infrared transmittance less than 25%.

In one embodiment of the present invention, the heat insulation layer performs a transparent state when no voltage is provided by the first electrode and the second electrode

### BRIEF DESCRIPTION OF THE DRAWINGS

Fig. 1 is a schematic view showing a transparent state of an adjustable heat insulation window according to one embodiment of the present invention.
Fig. 2 is a schematic view showing an absorption state of an adjustable heat insulation window according to one embodiment of the present invention.
Fig. 3 is a schematic view showing a shielding state of an adjustable heat insulation window according to one embodiment of the present invention.
Fig. 4 shows the visible light (VIS) transmittance and the near infrared (NIR) transmittance of an adjustable heat insulation window under different voltages according to one embodiment of the present invention.
Fig. 5 shows transmittance of various wavelengths of an adjustable heat insulation window in the transparent state, the absorption state, and the shielding state according to one embodiment of the present invention.

### DETAILED DESCRIPTION OF THE PREFERRED EMBODIMENTS

The structure and the technical means adopted by the present invention to achieve the above and other objects can be best understood by referring to the following detailed description of the preferred embodiments. Furthermore, if there is no specific description in the invention, singular terms such as "a", "one", and "the" include the plural number. For example, "a compound" or "at least one compound" may include a plurality of compounds, and the mixtures thereof. If there is no specific description in the invention, "%" means "weight percentage (wt%)", and the numerical range (e.g., 10% to 11% of A) contains the upper and lower limit (i.e., 10%≦A≦11%). If the lower limit is not defined in the range (e.g., less than, or below 0.2% of B), it means that the lower limit may be 0 (i.e., 0%≦B≦0.2%). The proportion of "weight percent" of each component can be replaced by the proportion of "weight portion" thereof. The abovementioned terms are used to describe and understand the present invention, but the present invention is not limited thereto.

According to one embodiment of the present invention, an adjustable heat insulation window is provided with a first transparent substrate 10 having a first electrode (not shown); a second transparent substrate 20 having a second electrode (not shown); and a heat insulation layer 30 disposed between the first transparent substrate 10 and the second transparent substrate 20. The first transparent substrate 10 and the second transparent substrate 20 can be generally usable glass substrates. The first electrode and the second electrode are for example formed by indium tin oxides (ITO) which can be used for transparent electrodes of general liquid crystal displays.

The heat insulation layer 30 comprises a liquid crystal composition. The liquid crystal composition comprises a plurality of liquid crystal molecules 31, a dichroic dye 32, and an ionic salt 33. Preferably, the liquid crystal molecules 31 have negative anisotropies. In one embodiment of the present invention, the liquid crystal molecules 31 are nematic liquid crystals, such as the nematic liquid crystals MLC2081, MLC2078, ZLI-2806, or ZLI2293 commercially obtained from Merck company, but they are not limited thereto. Preferably, the dichroic dye 32 has a visible absorption wavelength ranged from 400 to 780 nm, for example, 480 to 650 nm, but it is not limited thereto. The dichroic dye is for example S428 (Mithui). The ionic salt 33 is water soluble, which can dissociate negative ions 33a, and positive ions 33b. preferably, the ionic salt 33 is soluble in the liquid crystal molecules 31. Preferably, the ionic salt 33 can be sodium chloride (NaCI), calcium sulfate (CaSO₄), ammonium sulfate ((NH₄)₂SO₄), sodium carbonate (Na₂CO₃), sodium bicarbonate (NaHCO₃), potassium nitrate (KNO₃), or tetrabutylammonium tetrafluoroborate ( 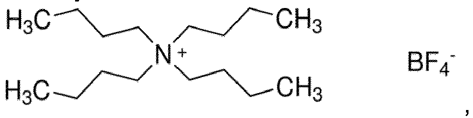 TBATFB). In one embodiment of the present invention, the weight ratio of the liquid crystal molecules 31, the dichroic dye 32, and the ionic salt 33 is for example 90-99 : 0.5-5 : 0.0002-5, preferably 98 : 1 : 1, but it is not limited thereto.

When the first electrode and the second electrode are configured to provide a voltage V, the transmittance of the heat insulation layer 30 can be lowered and the heat insulation layer 30 can absorb a part of visible light. In one embodiment of the present invention, the voltage is less than or equal to 10 V (volts), the heat insulation layer 30 has a visible light (VIS) transmittance ranged from 30 to 65%, such as 35, 45, 50, or 60%, but it is not limited thereto. When the voltage is more than or equal to 20 V, the heat insulation layer 30 has a visible light transmittance less than or equal to 5%, such as 5, 4, 3, 2, 1, or 0.5%, but it is not limited thereto. When the voltage is less than or equal to 10 V, the heat insulation layer 30 has a near infrared (NIR) transmittance more than or equal to 85%, such as 85, 86, 87, or 88%, but it is not limited thereto. In one embodiment of the present invention, when the voltage is more than or equal to 20 V, the heat insulation layer 30 has a near infrared transmittance less than or equal to 25%, such as 23, 21, 19, 17, or 15%, but it is not limited thereto. In one embodiment of the present invention, when the first electrode and the second electrode provides no voltage (i.e. V = 0 volts), the heat insulation layer 30 shows a transparent state in visual effect with a visible light transmittance about 65%. Therefore, the adjustable heat insulation window according to the present invention is normally transparent when the voltage is not applied, and can be returned to the transparent state when the power is cut off unexpectedly, so as to improve the safety when used as an automobile glass.

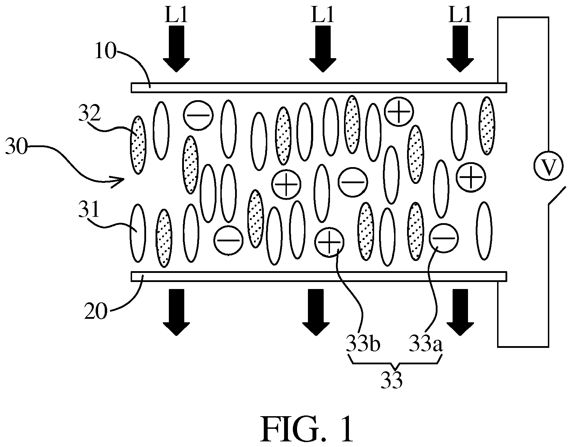

Refer to Fig. 1, which is a schematic view showing a transparent state of an adjustable heat insulation window according to one embodiment of the present invention. Since the liquid crystal molecules 31 have negative anisotropies, the liquid crystal molecules 31 are substantially perpendicular to the first transparent substrate 10 and the second transparent substrate 20 when no voltage is applied so that a light source L1 can pass through the adjustable heat insulation window to make users see the outside view from the inside of the adjustable heat insulation window.

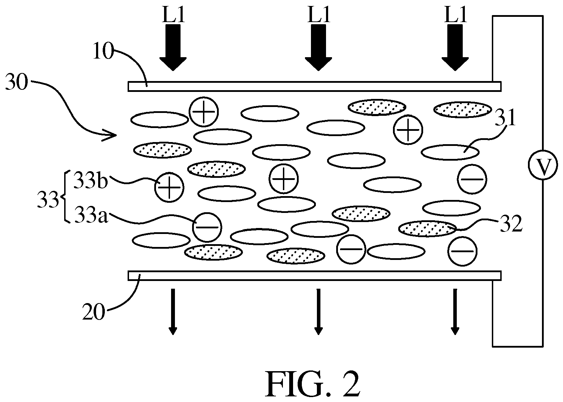

Refer to Fig. 2, which is a schematic view showing an absorption state of an adjustable heat insulation window according to one embodiment of the present invention. When applying a low-frequency AC voltage, since the liquid crystal molecules 31 have negative anisotropies, the long axis of each liquid crystal molecules 31 is controlled by the electric field and gradually oriented to be parallel with the first transparent substrate 10 and the second transparent substrate 20. At this time, the light source L1 is affected by the dichroic dye 32 and partial wavelengths of the light source L1 is absorbed by the dichroic dye 32 to perform a dark and low transparency state, and to provide a thermal insulation effect. In practice, the user can see the exterior view from the inside of the adjustable heat insulation window without feeling discomfort due to exposure to sunlight or strong light. The voltage may be 10 volts or less and may be, for example, 2, 3, 4, 5, 6, 7 or 8 volts, but it is not limited thereto.

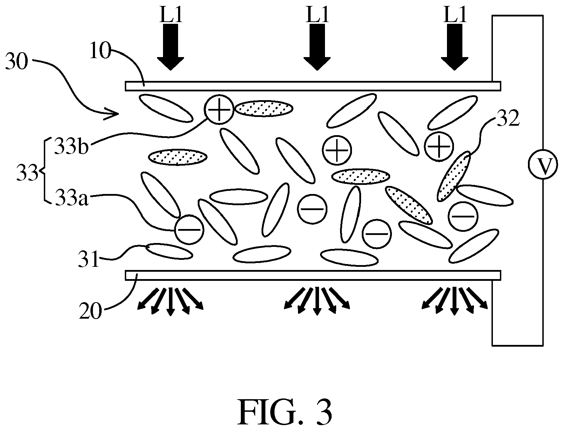

Refer to Fig. 3, which is a schematic view showing a shielding state of an adjustable heat insulation window according to one embodiment of the present invention. When the voltage increases continuously, the violent disturbances begin to occur to the ions so that the liquid crystal molecules 31 are affected to show chaotic arrangements to scatter the light source L1. In addition, the dichroic dye 32 absorbs a part of visible wavelengths of the light source L1 to exhibit the shielding state with a fogging dark color, so that adjustable heat insulation window is capable of shielding the light source L1, and is applicable to automobile glass with a very good privacy protection function and a thermal insulation effect. The voltage can be for example 10 volts or more, preferably 20 volts or more, but it is not limited thereto.

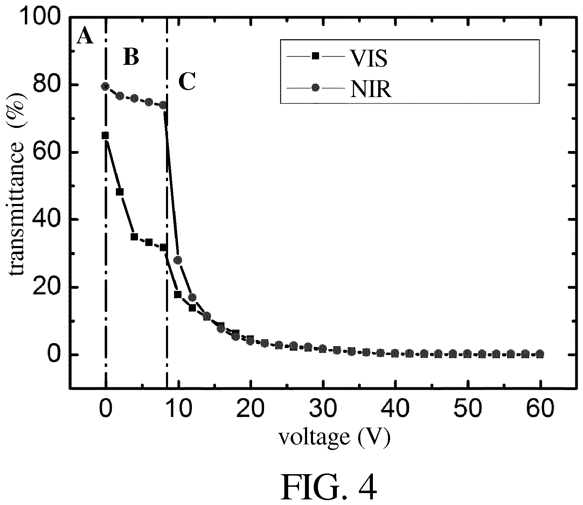

Refer to Fig. 4, which shows the visible light (VIS, 480-650 nm) transmittance and the near infrared (NIR, 700-750 nm) transmittance of an adjustable heat insulation window under different voltages according to one embodiment of the present invention. From Fig. 4, in area A without voltage being applied, the transmittances of VIS and NIR are relatively higher, and they are about 65% and 80%, respectively. When a little voltage is applied (B area), about 2-8 volts, it can be found that the transmittances of VIS are significantly decreased to be about 30%, but the transmittance of NIR are still maintained at about 80%. That is, the visible light is partially adsorbed by the dichroic dye but the adjustable heat insulation window still has a certain degree of transmittance, and has a thermal insulation effect since the visible light is partially adsorbed. When the voltage is raised continuously (C area) to about 20 volts, the transmittances of VIS and NIR are significantly decreased because the liquid crystal molecules are arranged to scatter the light source. In addition, the dichroic dye also adsorb the visible light to achieve scattering along with thermal insulation effect.

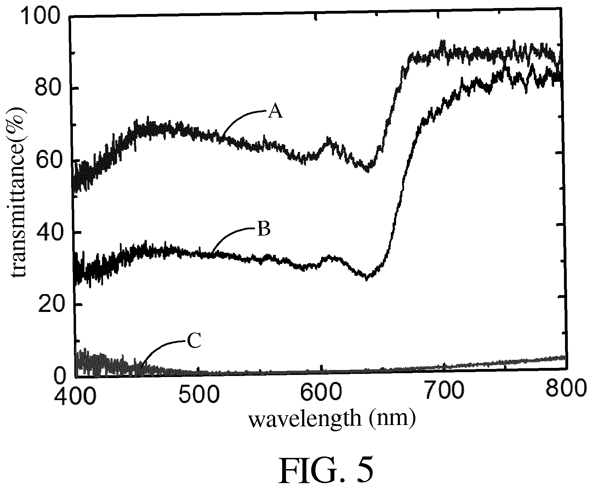

Refer to Fig. 5, which shows visible light transmittances corresponding to various wavelengths in a transparent state (A curve), an absorption state (B curve), and a shielding state (C curve). From Fig. 5, A curve and B curve show a relative lower transmittance within a section located at shorter wavelengths (less than about 650 nm). It can be understood that the adjustable heat insulation window blocks partial energies of the visible light, and indeed has a function of thermal insulation. Furthermore, from the difference between A curve and B curve, the visual effect of the absorption state is indeed between the shielding state and the transparent state, which is translucent. Compared with A and B curve, C curve shows a transmittance close to 0% so as to achieve an excellent shielding effect for privacy.

The present invention has been described with preferred embodiments thereof and it is understood that many changes and modifications to the described embodiments can be carried out without departing from the scope and the spirit of the invention that is intended to be limited only by the appended claims.

## Claims

1. An adjustable heat insulation window, comprising:
a first transparent substrate (10) comprising a first electrode;
a second transparent substrate (20) comprising a second electrode; and
a heat insulation layer (30) disposed between the first transparent substrate (10) and the second transparent substrate (20), wherein the heat insulation layer (30) comprises a liquid crystal composition;
**characterized in that** the liquid crystal composition comprises a plurality of liquid crystal molecules (31), a dichroic dye (32) and an ionic salt (33), the liquid crystal molecules (31) have negative anisotropies, and the dichroic dye (32) has a visible absorption wavelength ranged from 400 to 780 nm,
and the heat insulation layer (30) performs a transparent state when no voltage is provided by the first electrode and the second electrode.

2. The adjustable heat insulation window according to claim 1, **characterized in that** the liquid crystal molecules (31) are nematic.

3. The adjustable heat insulation window according to claim 1, **characterized in that** the ionic salt (33) is water soluble.

4. The adjustable heat insulation window according to claim 1, **characterized in that** the ionic salt (33) is NaCl, CaSO₄, (NH₄)₂SO₄, Na₂CO₃, NaHCO₃, KNO₃, or tetrabutylammonium tetrafluoroborate (TBATFB).

5. The adjustable heat insulation window according to claim 1, **characterized in that** the first electrode and the second electrode are configured to provide a voltage to lower the transmittance of the heat insulation layer (30) and allow the heat insulation layer (30) to absorb a part of visible light.

6. The adjustable heat insulation window according to claim 5, **characterized in that** the voltage is less than or equal to 10 V, and the heat insulation layer (30) has a visible light transmittance ranged from 30% to 65%.

7. The adjustable heat insulation window according to claim 5, **characterized in that** the voltage is more than or equal to 20 V, and the heat insulation layer (30) has a visible light transmittance less than or equal to 5%.

8. The adjustable heat insulation window according to claim 5, **characterized in that** the voltage is more than or equal to 20 V, and the heat insulation layer (30) has a near infrared transmittance less than or equal to 25%.
